# EUROPEAN PATENT APPLICATION

(11) **EP 4 589 731 A1**
(43) Date of publication of application: **23.07.2025**
(21) Application number: 24197413.8
(22) Date of filing: 29.08.2024
(51) Int. Cl.: H01M 10/613, H01M 10/655, H01M 10/6568

(54) **FLUID-COOLED BATTERY PACK**

(30) Priority: 19.01.2024 KR 20240008592
(71) Applicant: SAMSUNG SDI CO., LTD., Yongin-si, Gyeonggi-do 17084 (KR)
(72) Inventor: KIM, Jintaek, 16678 Suwon-si (KR)
(74) Representative: Marks & Clerk LLP

(57) **Abstract**

The present disclosure relates to an energy storage system and is directed to providing an energy storage system capable of efficient heat management and self-extinguishment when a battery cell ignites. To this end, the present disclosure provides an energy storage system which includes a case configured to accommodate a cooling fluid, a battery cell disposed inside the case and immersed in the cooling fluid, a support member that is disposed inside the case and supports the battery cell, and a heat dissipation member that is connected to the case and dissipates heat generated from the inside of the case.

## Description

### BACKGROUND

### 1. Field

Aspects of embodiments of the present disclosure relate to an energy storage system.

### 2. Description of the Related Art

Generally, an energy storage system (ESS) is a device that can store surplus electricity or store electricity produced using renewable energy. An ESS may be configured by installing a plurality of battery modules in racks and accommodating the plurality of racks in a container. A battery module may be constructed by assembling a plurality of secondary batteries, which are electrically connected to each other, in various structures.

Methods of cooling an energy storage system include an air-cooling method and a water-cooling method. Unlike the air-cooling method where a temperature variation between battery cells may be large and a local high-temperature section may occur, the water-cooling method has an advantage or desirable feature of enabling targeted temperature management and efficient cooling control. However, in the case of a water-cooled energy storage system, because battery cells are disposed inside a closed container, there is a risk that safety accidents, such as explosions due to an excessive increase in internal pressure, may occur when the battery cell ignites.

The above-described information is provided to enhance understanding of the background of the present disclosure, and thus may include information that does not constitute the related (or prior) art.

### SUMMARY

An aspect according to embodiments of the present disclosure is directed towards an energy storage system capable of efficient heat management and self-extinguishment when a battery cell ignites.

These and other aspects and features of the present disclosure will be described in or will be apparent from the following description of some embodiments of the present disclosure.

According to one or more embodiments of the present disclosure, an energy storage system includes a case having an internal space and a bottom surface; a cooling liquid accommodated inside the case; a battery cell inside the case and immersed in the cooling fluid, a support member inside the case and configured to support the battery cell, and a heat dissipation member connected to the case and configured to dissipate heat generated from inside of the case.

The battery cell may include a cell case having an internal space; an electrode assembly accommodated inside the cell case; and a vent facing the bottom surface of the case, the vent being configured to be opened when an internal pressure of the cell case increases.

The support member may include a first support member to support a lower side of the battery cell, and a second support member facing the first support member and to support an upper side of the battery cell.

The first support member may include a first support body that surrounds the lower side of the battery cell, a discharge portion that is formed to pass through the first support body and arranged to face the vent, and a seating portion that extends from the first support body and is in contact with the bottom surface of the case.

The discharge portion may be spaced apart from the bottom surface of the case.

The heat dissipation member may include a plurality of heat dissipation fins protruding from the case.

The case may include a case body, a cover facing the case body, and a gasket between the case body and the cover.

The gasket may be inserted into a gasket groove formed concavely toward inside of the case body.

The energy storage system may further include a relief member that is installed in the case and configured to rupture when an internal pressure of the case increases to a set pressure or higher.

The energy storage system may further include a blocking member that is arranged to face the relief member and configured to block a flame generated inside the case from being discharged to outside of the case.

The blocking member may include a plurality of mesh networks stacked in a direction from the internal space of the case toward the relief member.

According to another aspect of the present disclosure, an energy storage system includes a case having an internal space and a bottom surface; a cooling fluid accommodated inside the case, a battery cell inside the case and immersed in the cooling fluid, a support member inside the case and configured to support the battery cell, and a circulation member connected to the case and configured to circulate the cooling fluid.

The battery cell may include a cell case having an internal space; an electrode assembly accommodated inside the cell case; and a vent facing the bottom surface of the case, the vent being configured to be opened when an internal pressure of the cell case increases.

The circulation member may include a first port connected to the case and configured to supply the cooling fluid into the case, a second port spaced apart from the first port and configured to discharge the cooling fluid from inside of the case, a circulation line connected to the first port and the second port, a drive pump that is installed in the circulation line and configured to transmit the cooling fluid discharged from the second port to the first port, and a chiller that is installed in the circulation line and configured to cool the cooling fluid moving along the circulation line.

The first port may include a first port housing fixed to the case and connected to the internal space of the case, a first plug member that is movably installed in the first port housing and configured to open or close the first port housing according to a moving direction thereof, and a first adjustment member that is connected to the first plug member and configured to adjust the moving direction of the first plug member, and the second port may include a second port housing fixed to the case and connected to the internal space of the case, a second plug member that is movably installed in the second port housing and configured to open or close the second port housing according to a moving direction thereof, and a second adjustment member that is connected to the second plug member and configured to adjust the moving direction of the second plug member.

The first adjustment member may include a first elastic member that is arranged on one side of the first plug member and configured to press the first plug member in a direction in which the first port housing is closed, and a first pressing member that is arranged on the other side of the first plug member and configured to selectively press the first plug member in a direction in which the first port housing is opened.

The second adjustment member may include a second elastic member that is arranged on one side of the second plug member and configured to press the second plug member in a direction in which the second port housing is closed, and a second pressing member that is arranged on another side of the second plug member and configured to selectively press the second plug member in a direction in which the second port housing is opened.

The energy storage system may further include a detection sensor configured to detect a level of the cooling fluid inside the case, and a control module configured to control an operation of the circulation member according to data detected from the detection sensor.

The energy storage system may further include a heat dissipation member that is connected to the case and configured to dissipate heat generated from inside of the case.

The heat dissipation member may include a plurality of heat dissipation fins protruding from the case.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

The above and other objects, features and advantages of the present disclosure will become more apparent to those of ordinary skill in the art by describing example embodiments thereof in more detail with reference to the accompanying drawings, in which:
FIG. 1 is a perspective view schematically illustrating a configuration of an energy storage system according to an embodiment of the present disclosure;
FIG. 2 is a side cross-sectional view schematically illustrating the configuration of the energy storage system according to an embodiment of the present disclosure;
FIG. 3 is a front cross-sectional view schematically illustrating the configuration of the energy storage system according to an embodiment of the present disclosure;
FIG. 4 is a cross-sectional view schematically illustrating a configuration of a case according to an embodiment of the present disclosure;
FIG. 5 is a perspective view schematically illustrating the configuration of the case according to an embodiment of the present disclosure;
FIG. 6 is an exploded perspective view schematically illustrating a configuration of a support member according to an embodiment of the present disclosure;
FIG. 7 is a view schematically illustrating a configuration of a relief member according to an embodiment of the present disclosure;
FIG. 8 is a view schematically illustrating a configuration of a blocking member according to an embodiment of the present disclosure;
FIG. 9 is an exploded perspective view schematically illustrating a configuration of an energy storage system according to an embodiment of the present disclosure;
FIG. 10 is a view schematically illustrating a configuration of a circulation member according to an embodiment of the present disclosure;
FIG. 11 is a view schematically illustrating a configuration of a first port and a second port;
FIG. 12 is a block diagram schematically illustrating a configuration of a detection sensor and a control module;
FIGS. 13 to 16 are views schematically illustrating a process of adjusting a level of a cooling fluid;
FIG. 17 is an exploded perspective view schematically illustrating a configuration of an energy storage system according to still another embodiment of the present disclosure; and
FIG. 18 is a block diagram schematically illustrating the configuration of the energy storage system according to an embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted to have a meaning and concept consistent with the technical idea of the present disclosure based on the principle that the inventor can be his/her own lexicographer to appropriately define the concept of the term.

The embodiments described in this specification and the configurations shown in the drawings are provided as example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," "linked to," or "coupled to" another element or layer, it may be directly on, connected, linked to, or coupled to the other element or layer or one or more intervening elements or layers may also be present. When an element or layer is referred to as being "directly on," "directly connected to," "directly linked to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, components, and/or groups, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned or disposed) on the "above (or below)" or "on (or under)" a component, it may refer to that the arbitrary element is placed in contact with the upper (or lower) surface of the component and may also refer to that another component may be interposed between the component and any arbitrary element arranged (or located or positioned or disposed) on (or under) the component.

In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it refers to A, B, or A and B, unless otherwise stated. That is, "and/or" includes any or all combinations of a plurality of items enumerated. When "C to D" is stated, it refers to C or more and D or less, unless otherwise specified.

The terms used in the present specification are for describing embodiments of the present disclosure and are not intended to limit the scope of the present disclosure.

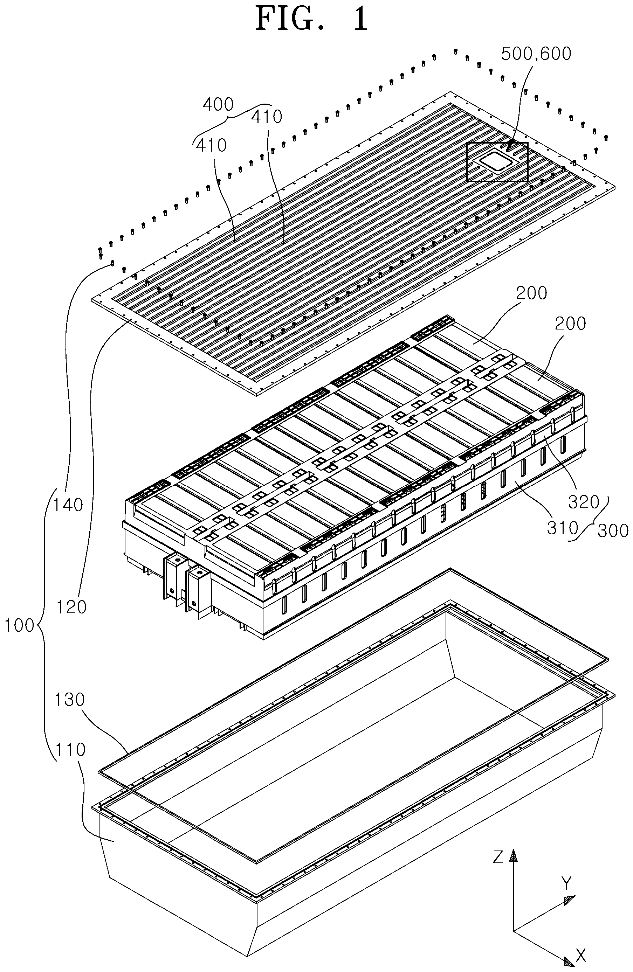

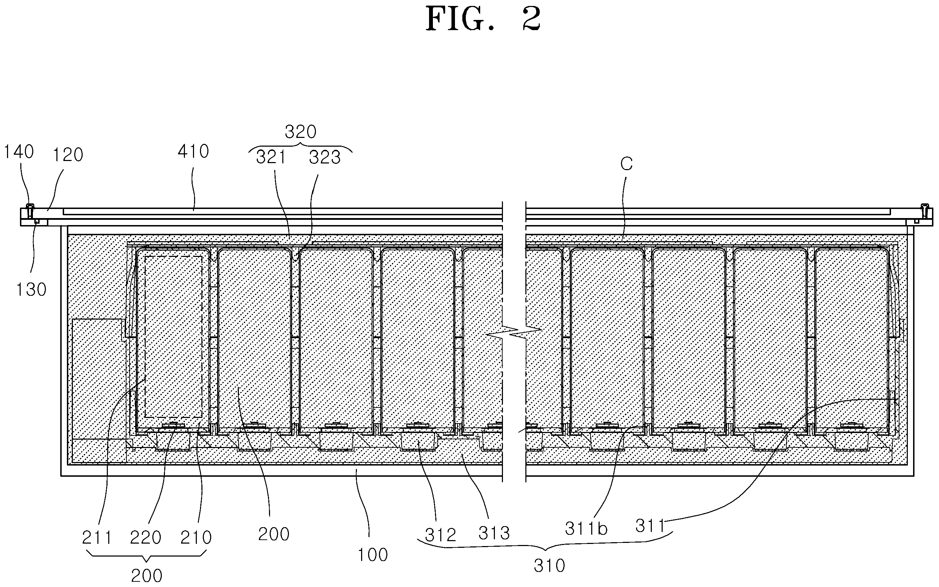

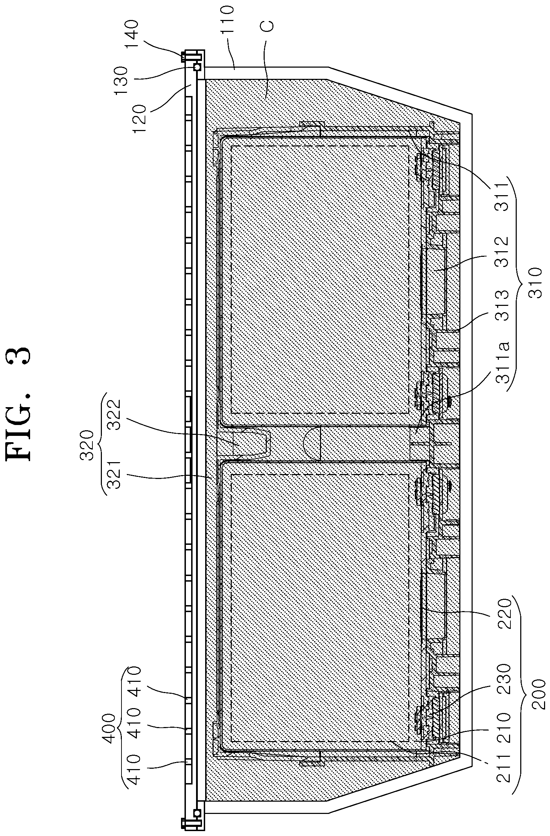

FIG. 1 is a perspective view schematically illustrating a configuration of an energy storage system according to an embodiment of the present disclosure, FIG. 2 is a side cross-sectional view schematically illustrating the configuration of the energy storage system according to an embodiment of the present disclosure, and FIG. 3 is a front cross-sectional view schematically illustrating the configuration of the energy storage system according to an embodiment of the present disclosure.

Referring to FIGS. 1 to 3, the energy storage system according to the present embodiment includes a case 100, a battery cell 200, a support member 300, and a heat dissipation member 400.

The case 100 may shape the appearance (e.g., form a schematic appearance) of the energy storage system and support (e.g., entirely support) the battery cell 200, the support member 300, and the heat dissipation member 400. A cooling fluid C may be accommodated inside the case 100. The cooling fluid C is a fluid that can cool the battery cell 200 through heat exchange with the battery cell 200, which will be described in more below, and may be a phase-change dielectric liquid material whose phase is changed into a liquid state or gaseous state based on a set temperature. For example, the cooling fluid C may include a Novec 7000 (e.g., 3M^{™} Novec^{™} 7000) series coolants.

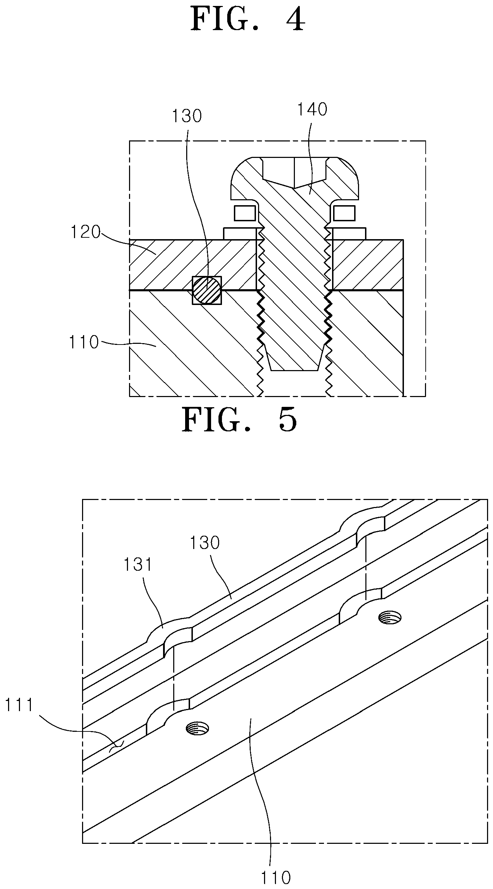

FIG. 4 is a cross-sectional view schematically illustrating a configuration of a case according to an embodiment of the present disclosure, and FIG. 5 is a perspective view schematically illustrating the configuration of the case according to an embodiment of the present disclosure.

Referring to FIGS. 1 to 5, the case 100 may include a case body 110, a cover 120, a gasket 130, and a fastening member 140.

The case body 110 may form an exterior of a lower side of the case 100 and provide a space inside which the cooling fluid C is accommodated. For example, the case body 110 may be formed to have the shape of a box with an empty interior (e.g., inside) and an open upper side. The design of the height, area, and the like of the case body 110 may be variously suitably changed depending on the size, number, and the like of the battery cell 200, which will be described in more detail below. The cooling fluid C may be accommodated inside the case body 110 at a set or predetermined height. The height of the cooling fluid C may be smaller than the height of the case body 110. Accordingly, a space for phase change of the cooling fluid C may be provided inside the case body 110.

A longitudinal direction of the case body 110 to be described below may be a direction parallel to the Y-axis with respect to FIG. 1, a width direction of the case body 110 may be a direction parallel to the X-axis with respect to FIG. 1, and a vertical direction or a height direction of the case body 110 may be a direction parallel to the Z-axis with respect to FIG. 1.

The cover 120 may form an exterior of an upper side of the case 100 and open or close the internal space of the case body 110. The cover 120 may be formed to have a plate shape and may be disposed to face an upper surface of the case body 110.

The cover 120 may be detachably coupled to the case body 110. For example, the cover 120 may be fixed to the upper surface of the case body 110 or separated from the upper surface of the case body 110, through the fastening member 140, which will be described in more detail below. The fastening member 140 may be formed to have the shape of a bolt with screw threads on an outer circumferential surface thereof. The fastening member 140 may vertically pass through the cover 120 and the case body 110 after the cover 120 is seated (e.g., placed or arranged) on the upper surface of the case body 110, and may be coupled to the cover 120 and the case body 110 using a screw joining method. The fastening member 140 may be provided as a plurality of fastening members 140. The plurality of fastening members 140 may be disposed to be spaced at a set or predetermined interval from each other along (e.g., in an extension direction of) the upper surface of the case body 110.

The gasket 130 is disposed between the case body 110 and the cover 120 and seals a gap between the case body 110 and the cover 120. That is, the gasket 130 may function as a component that blocks the cooling fluid C accommodated in the case body 110 from being discharged to a gap between the case body 110 and the cover 120. The gasket 130 may be formed to have a hollow ring shape and may be disposed to face the upper surface of the case body 110. The gasket 130 may be made of an elastically deformable material such as rubber, silicone, or the like. The gasket 130 may be inserted into a gasket groove 111 that is concavely recessed downward from the upper surface of the case body 110. In this case, an upper end portion of the gasket 130 may protrude at a set or predetermined distance upward from the case body 110. When the cover 120 is seated or arranged on the upper surface of the case body 110, the gasket 130 may be compressed up and down by its own elastic restoring force and may be adhered (e.g., strongly adhered) to the cover 120 and the case body 110.

The gasket 130 may include a groove 131. The groove 131 may be a portion of an entire section of the gasket 130 whose inner surface is disposed to surround a peripheral surface of the fastening member 140. The design of a curvature of the groove 131 may be variously suitably changed depending on a diameter of the fastening member 140 or the like. The groove 131 may be provided as a plurality of grooves 131. The plurality of grooves 131 may be disposed to be spaced at a set or predetermined interval from each other in a longitudinal direction of the gasket 130.

The battery cell 200 may function as a unit structure that stores and supplies power in the energy storage system.

Examples of the battery cell 200 may include a prismatic secondary battery in which an electrode assembly 211 including a positive electrode plate and a negative electrode plate provided on both sides of a separator is accommodated inside the cell case 210, and which is capable of charging or discharging a preset amount of power. The electrode assembly 211 may be formed in a wound form in which the positive electrode plate, the separator, and the negative electrode plate are wound in a roll shape, or may be formed in a laminated form in which the positive plate, the separator, and the negative electrode plate are stacked on top of each other.

The battery cell 200 may be disposed inside the case 100, for example, inside the case body 110. The battery cell 200 may be immersed in the cooling fluid C inside the case body 110. The cooling fluid C may cool the battery cell 200 through heat exchange with the battery cell 200. In this case, the phase of a portion of the cooling fluid C may be changed into a gaseous state and this portion of the cooling fluid C may be moved to a space on the upper side of the case body 110.

A vent 220 that is opened when an internal pressure of the cell case 210 increases may be formed on one surface of the cell case 210. The vent 220 may be disposed on a central portion of one surface of the cell case 210. The vent 220 may be disposed to face the case 100, for example, to face a bottom surface of the case body 110. Accordingly, the vent 220 may prevent or substantially prevent gas or other moving or flying products from directly impacting the cover 120 when the battery cell 200 explodes or catches fire.

A pair of cell tabs 230 electrically connected to the electrode assembly 211 may be formed to protrude from one surface of the cell case 210 in which the vent 220 is formed. The pair of cell tabs 230 may be individually connected to different electrodes of the electrode assembly 211. The pair of cell tabs 230 may be disposed on both sides of the vent 220 with the vent 220 interposed therebetween.

The battery cell 200 may be provided as a plurality of battery cells 200. The plurality of battery cells 200 may be arranged in a plurality of rows inside the case body 110 in the width direction of the case body 110. Hereinafter, an example in which the plurality of battery cells 200 are arranged in two rows in the width direction of the case body 110 will be described. The plurality of battery cells 200 provided in any one row may be arranged in a row in the longitudinal direction of the case body 110.

The support member 300 may function as a component that is disposed inside the case 100 and supports the battery cell 200 inside the case 100. Accordingly, the support member 300 may prevent or substantially prevent a position of the battery cell 200 from being arbitrarily changed inside the case 100.

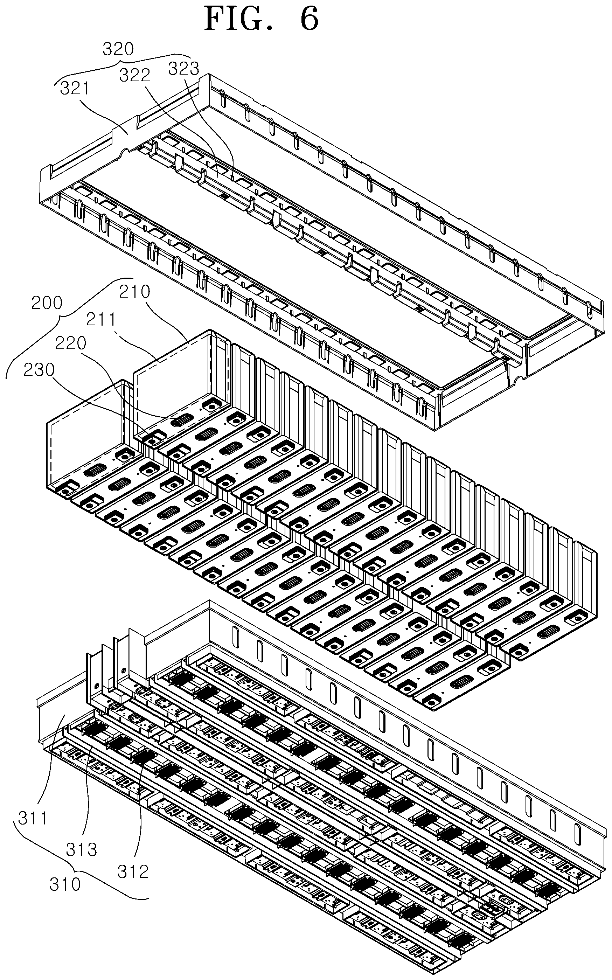

FIG. 6 is an exploded perspective view schematically illustrating a configuration of a support member according to an embodiment of the present disclosure.

Referring to FIGS. 2, 3, and 6, the support member 300 may include a first support member 310 and a second support member 320.

The first support member 310 may form an exterior of one (e.g., lower) side of the support member 300 and support a lower side of the battery cell 200.

The first support member 310 may include a first support body 311, a discharge portion 312, and a seating portion 313.

The first support body 311 may be formed to have the shape of a box with an empty interior and an open upper surface. A lower surface of the first support body 311 may be disposed to face the bottom surface of the case body 110. The battery cell 200 may be inserted into the first support body 311 through the open upper surface of the first support body 311. A height of the first support body 311 may be smaller than a height of the battery cell 200. An inner surface of the first support body 311 may be disposed to surround a peripheral surface of the lower side of the battery cell 200. A plurality of bus bars electrically connected to the cell tabs 230 of the battery cell 200 may be installed on the first support body 311.

A first lower partition 311a and a second lower partition 311b may be formed in the first support body 311.

The first lower partition 311a may protrude upward from a bottom surface of the first support body 311 and extend in a direction parallel to the longitudinal direction of the case body 110. The first lower partition 311a may be inserted between the battery cells 200 that are disposed adjacent to each other in the width direction of the case body 110. Accordingly, the first lower partition 311a may allow an interval between the battery cells 200 that are disposed adjacent to each other in the width direction of the case body 110 to be maintained constant.

The second lower partition 311b may protrude upward from the bottom surface of the first support body 311 and extend in a direction parallel to the width direction of the case body 110. The second lower partition 311b may be provided as a plurality of second lower partitions 311b. The plurality of second lower partitions 311b may be disposed to be spaced apart from each other in the longitudinal direction of the case body 110. The respective second lower partitions 311b may be individually inserted between a pair of battery cells 200 that are disposed adjacent to each other in the longitudinal direction of the case body 110. Accordingly, the second lower partition 311b may allow an interval between the battery cells 200 that are disposed adjacent to each other in the longitudinal direction of the case body 110 to be maintained constant.

The discharge portion 312 may be formed to pass through the first support body 311 and may discharge gas, moving or flying products, or the like discharged from the vent 220 to the outside of the first support body 311. The discharge portion 312 may protrude downward from the lower surface of the first support body 311. Both (e.g., opposing) end portions of the discharge portion 312 may be formed to be opened and may each be disposed to face the bottom surface of the case body 110 and the vent 220, respectively. A lower end portion of the discharge portion 312 may be disposed to be spaced apart from the bottom surface of the case body 110. Accordingly, the discharge portion 312 may cause (e.g., enable), when the vent 220 is opened, the gas, the moving or flying products, etc., discharged from the vent 220 to be discharged (e.g., smoothly discharged) to the outside of the first support body 311, and at the same time, cause (e.g., enable) the cooling fluid C to be introduced into the vent 220. The discharge portion 312 may be provided as a plurality of discharge portions 312. The plurality of discharge portions 312 may be individually disposed to face the vents 220 of different battery cells 200.

The seating portion 313 may function as a component that supports (e.g., entirely supports) the first support body 311 with respect to the bottom surface of the case body 110. The seating portion 313 may extend vertically downward from the lower surface of the first support body 311 and may be in contact with the case 100, for example, the bottom surface of the case body 110. A longitudinal direction of the seating portion 313 may be parallel to the longitudinal direction of the case body 110. A height of the seating portion 313 may be greater than a height of the discharge portion 312. Accordingly, the seating portion 313 may cause (e.g., enable) the discharge portion 312 to be spaced apart from the bottom surface of the case body 110. The seating portion 313 may be provided as a plurality of seating portions 313. The plurality of seating portions 313 may be disposed to be spaced apart from each other in the width direction of the case body 110.

The second support member 320 may form an exterior of the other (e.g., upper) side of the support member 300 and support an upper side of the battery cell 200.

The second support member 320 may include a second support body 321, a first upper partition 322, and a second upper partition 323.

The second support body 321 may be formed to have the open shape of a box with an empty interior and an open lower surface. An upper surface of the second support body 321 may be disposed to face a lower surface of the cover 120. The upper surface of the second support body 321 may be spaced at a set or predetermined distance from the lower surface of the cover 120. Accordingly, the second support body 321 may provide a space, in which the portion of cooling fluid C whose phase has been changed into a gaseous state can be positioned, between the cover 120 and the second support body 321.

An upper end portion of the battery cell 200 may be inserted into the second support body 321 through the open lower surface of the second support body 321. An inner surface of the second support body 321 may be disposed to surround a peripheral surface of the upper side of the battery cell 200.

A height of the second support body 321 may be smaller than the height of the battery cell 200. The sum of the heights of the first support body 311 and the second support body 321 may be greater than the height of the battery cell 200. In this case, a side surface of the second support body 321 may be coupled to a side surface of the first support body 311 by welding, bolting, etc., while being in contact with the side surface of the first support body 311.

The first upper partition 322 may protrude downward from a ceiling surface of the second support body 321 and extend in the direction parallel to the longitudinal direction of the case body 110. The first upper partition 322 may be inserted between the battery cells 200 that are disposed adjacent to each other in the width direction of the case body 110. Accordingly, the first upper partition 322, together with the first lower partition 311a, may allow an interval between the battery cells 200 that are disposed adjacent to each other in the width direction of the case body 110 to be maintained constant.

The second upper partition 323 may protrude downward from the ceiling surface of the first support body 311 and extend in the direction parallel to the width direction of the case body 110. The second upper partition 323 may be provided as a plurality of second upper partitions 323. The plurality of second upper partitions 323 may be disposed to be spaced apart from each other in the longitudinal direction of the case body 110. The respective second upper partitions 323 may be individually inserted between a pair of battery cells 200 that are disposed adjacent to each other in the longitudinal direction of the case body 110. Accordingly, the second upper partition 323, together with the second lower partition 311b, may allow an interval between the battery cells 200 that are disposed adjacent to each other in the longitudinal direction of the case body 110 to be maintained constant.

The heat dissipation member 400 may be connected to the case 100 and dissipate heat generated from the inside of the case 100 to the outside of the case 100.

The heat dissipation member 400 may include a plurality of heat dissipation fins 410.

The heat dissipation fin 410 may protrude upward from the case 100, for example, from an upper surface of the cover 120. The heat dissipation fin 410 may be formed to have a thin plate shape. The heat dissipation fin 410 may be made of a material with high thermal conductivity, such as aluminum or the like. A longitudinal direction of the heat dissipation fin 410 may be parallel to the longitudinal direction of the case body 110. In this case, the plurality of heat dissipation fins 410 may be arranged in a plurality of rows in the width direction of the case body 110. The heat dissipation fin 410 may cool the battery cell 200 and exchange heat with the portion of cooling fluid C whose phase has been changed into a gaseous state. Thereafter, the heat dissipation fin 410 may discharge the heat received from the cooling fluid C to the outside air to change the phase of the cooling fluid C back into a liquid state (e.g., by cooling the temperature of the cooling fluid C). Accordingly, the heat dissipation fin 410 may guide (e.g., enable) the battery cell 200 to be continuously cooled even without replacing the cooling fluid C.

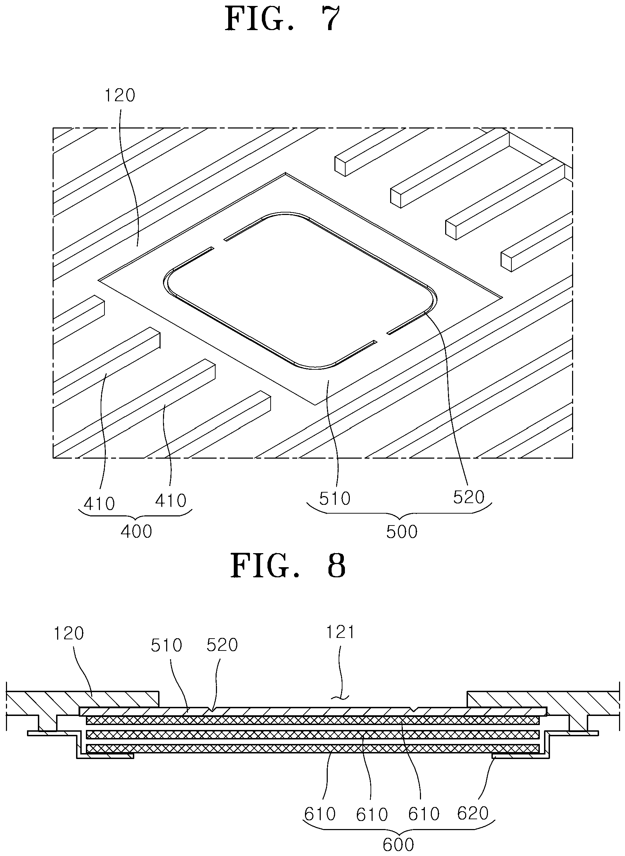

FIG. 7 is a view schematically illustrating a configuration of a relief member according to an embodiment of the present disclosure, and FIG. 8 is a view schematically illustrating a configuration of a blocking member according to an embodiment of the present disclosure.

Referring to FIGS. 7 and 8, the energy storage system according to the present embodiment may further include a relief member 500 and a blocking member 600.

The relief member 500 may be installed in the case 100 and rupture when an internal pressure of the case 100 is increased to a set pressure or higher. That is, the relief member 500 may function as a component that relieves the internal pressure of the case 100 by opening the internal space of the case 100 when the internal pressure of the case 100 is excessively increased due to an explosion or fire of the battery cell 200.

The relief member 500 may include a rupture disk 510 and a rupture guide groove 520.

The rupture disk 510 may be formed to have the shape of a plate or thin film having a thickness smaller than that of the cover 120. The rupture disk 510 may be disposed to block a through-hole 121 formed to pass through one side of the cover 120. An edge (e.g., edge side) of the rupture disk 510 may be fixed to the cover 120 through welding, adhesive, etc. Upper and lower surfaces of the rupture disk 510 may be disposed to face an external space of the cover 120 and the internal space of the case body 110, respectively.

The rupture guide groove 520 may be formed to have the shape of a notch that is concavely recessed from a surface of the rupture disk 510. The rupture guide groove 520 may be formed to have a substantially C shape. The rupture guide groove 520 may be provided as a pair of rupture guide grooves 520, and the pair of rupture guide grooves 520 may be disposed to face each other on the rupture disk 510. Both (e.g., opposing) end portions of the pair of rupture guide groove 520 may be disposed to be spaced apart from each other. The rupture guide groove 520 may rupture when the internal pressure of the case body 110 is increased to a set pressure or higher. Accordingly, a central portion of the rupture disk 510 may be opened around the rupture guide groove 520 and the gas or the like generated inside the case body 110 may be discharged to the outside.

The blocking member 600 may be disposed to face the relief member 500 and may block a flame generated inside the case 100 from being discharged to the outside. That is, the blocking member 600 may function as a component that, when the relief member 500 ruptures, allows a gas or the like generated inside the case 100 to pass through the through-hole 121, and at the same time, blocks the flame from passing through the through-hole 121. Accordingly, the blocking member 600 may block the flame from spreading to adjacent facilities (e.g., units) of the energy storage system.

The blocking member 600 may include a plurality of mesh networks 610.

The mesh network 610 may be formed to have the shape of a plate with a plurality of mesh holes. The mesh network 610 may be made of a high-strength, high-heat-resistance metal material, such as aluminum, stainless steel, or the like. The plurality of mesh networks 610 may be disposed below the rupture disk 510 and be parallel to the rupture disk 510. The plurality of mesh networks 610 may be sequentially stacked in a direction from the internal space of the case body 110 toward the rupture disk 510.

The plurality of mesh networks 610 may be supported on the lower side of the rupture disk 510 through a support bracket 620 fixed to the lower surface of the cover 120. The plurality of mesh networks 610 may be coupled to the support bracket 620 in various suitable coupling methods such as welding, bolting, fitting, and the like. The specific shape of the support bracket 620 is not limited to the shape illustrated in FIG. 8, and the design of the support bracket 620 may be changed to various suitable shapes capable of supporting the plurality of mesh networks 610 in a stacked state.

Hereinafter, an energy storage system according to another embodiment of the present disclosure will be described.

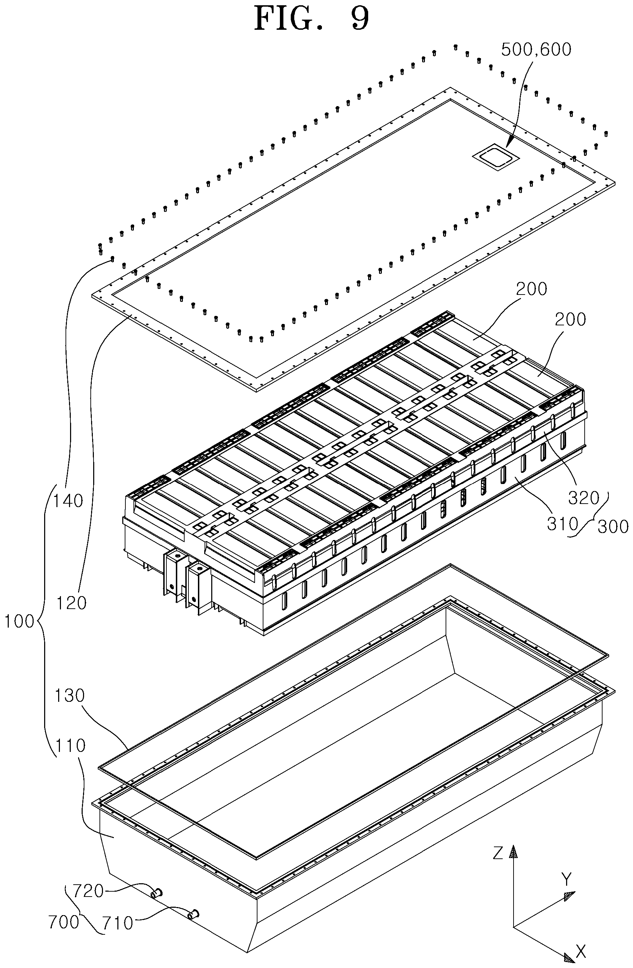

FIG. 9 is an exploded perspective view schematically illustrating a configuration of the energy storage system according to an embodiment of the present disclosure.

Referring to FIG. 9, the energy storage system according to the present embodiment may include a case 100, a battery cell 200, a support member 300, and a circulation member 700.

The case 100, the battery cell 200, and the support member 300 according to the present embodiment may be configured in substantially the same way as the case 100, the battery cell 200, and the support member 300 according to an embodiment of the present disclosure described with reference to FIGS. 1 to 8.

Accordingly, in describing the energy storage system according to the present embodiment, only the circulation member 700 that was not described in the energy storage system according to an embodiment of the present disclosure will be described.

The circulation member 700 may be connected to the case 100 and function as a component that circulates a cooling fluid C. Accordingly, the circulation member 700 may allow the temperature of the cooling fluid C to be maintained constant during an operation process of the battery cell 200.

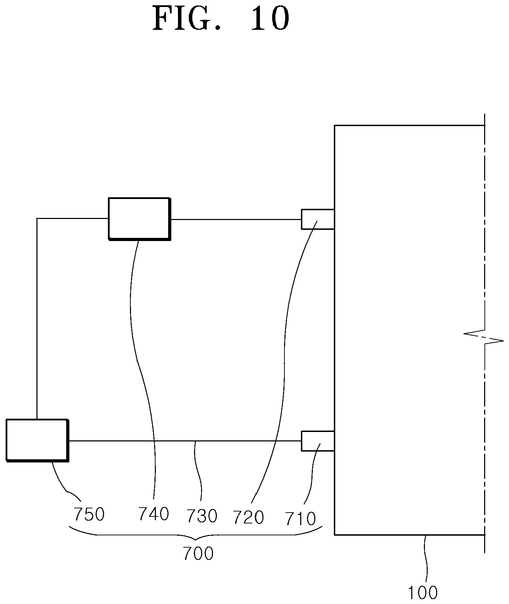

FIG. 10 is a view schematically illustrating a configuration of a circulation member according to an embodiment of the present disclosure.

Referring to FIG. 10, the circulation member 700 may include a first port 710, a second port 720, a circulation line 730, a drive pump 740, and a chiller 750.

The first port 710 may be connected to the case 100 and supply the cooling fluid C to the case 100.

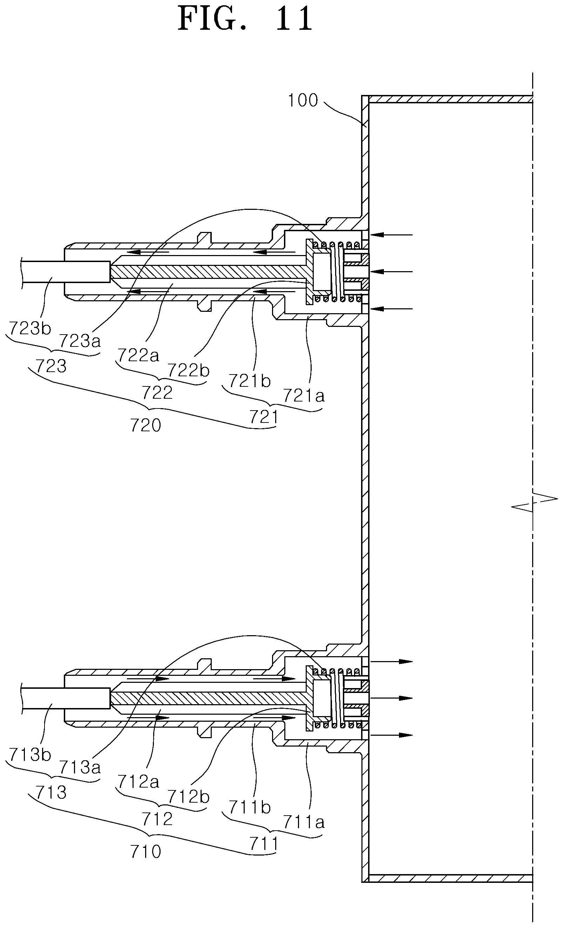

FIG. 11 is a view schematically illustrating a configuration of a first port and a second port.

Referring to FIG. 11, the first port 710 may include a first port housing 711, a first plug member 712, and a first adjustment member 713.

The first port housing 711 may be formed to have the shape of a pipe with an empty interior (e.g., a hollow pipe) and two open end portions. The first port housing 711 may include a first large-diameter portion 711a fixed to the case body 110, and a first small-diameter portion 711b that extends from the first large-diameter portion 711a and has a diameter smaller than a diameter of the first large-diameter portion 711a. One end portion of the first large-diameter portion 711a may communicate with an internal space of the case body 110. Due to a difference in diameter between the first large-diameter portion 711a and the first small-diameter portion 711b, a step structure may be formed between the first large-diameter portion 711a and the first small-diameter portion 711b. The cooling fluid C moving along a circulation line 730, which will be described in more detail below, may be supplied into the case body 110 by sequentially passing through the first small-diameter portion 711b and the first large-diameter portion 711a.

The first plug member 712 may be movably installed in the first port housing 711 and open or close the first port housing 711 depending on a moving direction thereof.

The first plug member 712 may include a first moving rod 712a and a first plug 712b.

The first moving rod 712a may be disposed inside the first port housing 711. A longitudinal direction of the first moving rod 712a may be parallel to a longitudinal direction of the first port housing 711, that is, in an extension direction of the first large-diameter portion 711a and the first small-diameter portion 711b. The first moving rod 712a may be installed to be reciprocally moveable in a longitudinal direction thereof inside the first port housing 711.

The first plug 712b may be connected to one end portion of the first moving rod 712a and disposed inside the first large-diameter portion 711a. A diameter of the first plug 712b may be greater than a diameter of the first small-diameter portion 711b. The first plug 712b may come into contact with or be separated from an inner surface of the first large-diameter portion 711a connected to the first small-diameter portion 711b depending on a moving direction of the first moving rod 712a. When the first plug 712b comes into contact with the inner surface of the first large-diameter portion 711a connected to the first small-diameter portion 711b, the first plug 712b may block the cooling fluid C from moving between the first large-diameter portion 711a and the first small-diameter portion 711b. When the first plug 712b is separated from the inner surface of the first large-diameter portion 711a connected to the first small-diameter portion 711b, the first plug 712b may allow the cooling fluid C to move between the first large-diameter portion 711a and the first small-diameter portion 711b.

The first adjustment member 713 may be connected to the first plug member 712 and adjust the moving direction of the first plug member 712.

The first adjustment member 713 may include a first elastic member 713a and a first pressing member 713b.

The first elastic member 713a may be disposed on one side of the first plug member 712 and press (e.g., always press) the first plug member 712 in a direction in which the first port housing 711 is closed. The first elastic member 713a may be formed to have the shape of a coil spring that can expand or contract in a longitudinal direction thereof. Both (e.g., opposing) end portions of the first elastic member 713a may be connected to the inner surface of the first large-diameter portion 711a connected to the case body 110, and the first plug 712b, respectively. When no separate external force is applied to the first plug member 712, the first elastic member 713a may bring the first plug 712b into contact with the inner surface of the first large-diameter portion 711a connected to the first small-diameter portion 711b by its own elastic restoring force.

The first pressing member 713b may be disposed on the other side of the first plug member 712 and selectively press the first plug member 712 in a direction in which the first port housing 711 is opened. The first pressing member 713b may be disposed to face the end portion of the first moving rod 712a disposed inside the first small-diameter portion 711b. The first pressing member 713b may be installed in the first small-diameter portion 711b to be reciprocally moveable in a direction parallel to the longitudinal direction of the first moving rod 712a. The first pressing member 713b may be in contact with or be separated from the end portion of the first moving rod 712a in a moving direction thereof. When the first pressing member 713b is in contact with the end portion of the first moving rod 712a, the first pressing member 713b may press the first moving rod 712a in a direction opposite to the first elastic member 713a, and move the first moving rod 712a in a direction in which the first plug 712b is separated from the inner surface of the first large-diameter portion 711a connected to the first small-diameter portion 711b. The specific shape of the first pressing member 713b is not limited to that illustrated in FIG. 11, and the design of the first pressing member 713b may be variously suitably changed within the technical idea of a shape that can press the first moving rod 712a or release the press of the first moving rod 712a depending on the moving direction. The first pressing member 713b may be manually moved by a worker, or alternatively, may be automatically moved by being connected to a separate actuator such as a motor, a solenoid, or the like.

The second port 720 may be connected to the case 100 and discharge the cooling fluid C from the case 100. The second port 720 may be disposed to be spaced apart from the first port 710.

The second port 720 may include a second port housing 721, a second plug member 722, and a second adjustment member 723.

The second port housing 721 may be formed to have the shape of a pipe with an empty interior (e.g., a hollow pipe) and two open end portions. The second port housing 721 may include a second large-diameter portion 721a fixed to the case body 110, and a second small-diameter portion 721b that extends from the second large-diameter portion 721a and has a diameter smaller than a diameter of the second large-diameter portion 721a. One end portion of the second large-diameter portion 721a may communicate with the internal space of the case body 110. Due to a difference in diameter between the second large-diameter portion 721a and the second small-diameter portion 721b, a step structure may be formed between the second large-diameter portion 721a and the second small-diameter portion 721b. The cooling fluid C inside the case body 110 may be discharged to the circulation line 730 by sequentially passing through the second large-diameter portion 721a and the second small-diameter portion 721b.

The second plug member 722 may be movably installed in the second port housing 721 and open or close the second port housing 721 depending on the moving direction thereof.

The second plug member 722 may include a second moving rod 722a and a second plug 722b.

The second moving rod 722a may be disposed inside the second port housing 721. A longitudinal direction of the second moving rod 722a may be parallel to a longitudinal direction of the second port housing 721, that is, in the extension direction of the second large-diameter portion 721a and the second small-diameter portion 721b. The second moving rod 722a may be installed in the second port housing 721 to be reciprocally moveable in the longitudinal direction.

The second plug 722b may be connected to one end portion of the second moving rod 722a and disposed inside the second large-diameter portion 721a. A diameter of the second plug 722b may be greater than a diameter of the second small-diameter portion 721b. The second plug 722b may be in contact with or be separated from an inner surface of the second large-diameter portion 721a connected to the second small-diameter portion 721b depending on a moving direction of the second moving rod 722a. When the second plug 722b is in contact with the inner surface of the second large-diameter portion 721a connected to the second small-diameter portion 721b, the second plug 722b may block the cooling fluid C from flowing between the second large-diameter portion 721a and the second small-diameter portion 721b. When the second plug 722b is separated from the inner surface of the second large-diameter portion 721a connected to the second small-diameter portion 721b, the second plug 722b may allow the cooling fluid C to flow between the second large-diameter portion 721a and the second small-diameter portion 721b.

The second adjustment member 723 may be connected to the second plug member 722 and adjust the moving direction of the second plug member 722.

The second adjustment member 723 may include a second elastic member 723a and a second pressing member 723b.

The second elastic member 723a may be disposed on one side of the second plug member 722 and press (e.g., always press) the second plug member 722 in a direction in which the second port housing 721 is closed. The second elastic member 723a may be formed to have the shape of a coil spring that can expand and contract in a longitudinal direction thereof. Both (e.g., opposing) end portions of the second elastic member 723a may each be connected to the inner surface of the second large-diameter portion 721a connected to the case body 110, and the second plug 722b. When no separate external force is applied to the second plug member 722, the second elastic member 723a may bring the second plug 722b into contact with the inner surface of the second large-diameter portion 721a connected to the second small-diameter portion 721b by its own elastic restoring force.

The second pressing member 723b may be disposed on the other side of the second plug member 722 and selectively press the second plug member 722 in a direction in which the second port housing 721 is opened. The second pressing member 723b may be disposed to face an end portion of the second moving rod 722a disposed inside the second small-diameter portion 721b. The second pressing member 723b may be installed in the second small-diameter portion 721b to be reciprocally moveable in a direction parallel to the longitudinal direction of the second moving rod 722a. The second pressing member 723b may come into contact with or be separated from the end portion of the second moving rod 722a in a moving direction thereof. When the second pressing member 723b comes into contact with the end portion of the second moving rod 722a, the second pressing member 723b may press the second moving rod 722a in a direction opposite to the second elastic member 723a, and move the second moving rod 722a in a direction in which the second plug 722b is separated from the inner surface of the second large-diameter portion 721a connected to the second small-diameter portion 721b. The specific shape of the second pressing member 723b is not limited to that illustrated in FIG. 11, and the design of the second pressing member 723b may be variously suitably changed within the technical idea of a shape that can press the second moving rod 722a or release the press of the second moving rod 722a depending on the moving direction. The second pressing member 723b may be manually moved by a worker or alternatively, may be automatically moved by being connected to a separate actuator, such as a motor, a solenoid, or the like.

The circulation line 730 may be connected to the first port 710 and the second port 720 and function as a component that provides a circulation path for the cooling fluid C. The circulation line 730 may be formed to have the shape of a pipe with an empty interior (e.g., a hollow pipe) and two open end portions. One end portion of the circulation line 730 may be connected to the first small-diameter portion 711b of the first port housing 711. One end portion of the circulation line 730 may be directly connected to the first small-diameter portion 711b or may be indirectly connected to the first small-diameter portion 711b through the first pressing member 713b. The other end portion of the circulation line 730 may be connected to the second small-diameter portion 721b of the second port housing 721. The other end portion of the circulation line 730 may be directly connected to the second small-diameter portion 721b or may be indirectly connected to the second small-diameter portion 721b through the second pressing member 723b. A storage tank for storing the cooling fluid C may be additionally installed in the circulation line 730.

The drive pump 740 may be installed in the circulation line 730 and transmit (e.g., transfer) the cooling fluid C discharged from the second port 720 to the first port 710. Examples of the drive pump 740 may include various types of fluid pumps that can receive power from the outside and provide flow force to the cooling fluid C inside the circulation line 730. The drive pump 740 may receive the cooling fluid C discharged from the second port 720 through an inlet thereof and transmit the cooling fluid C to the first port 710 through an outlet thereof.

The chiller 750 may be installed in the circulation line 730 and cool the cooling fluid C moving along the circulation line 730. The chiller 750 may be connected to the circulation line 730, and examples of the chiller 750 may include various types of heat exchangers capable of exchanging heat with the cooling fluid C moving along the circulation line 730. The chiller 750 may be disposed on a front end side of the drive pump 740 or may be disposed on a rear end side of the drive pump 740.

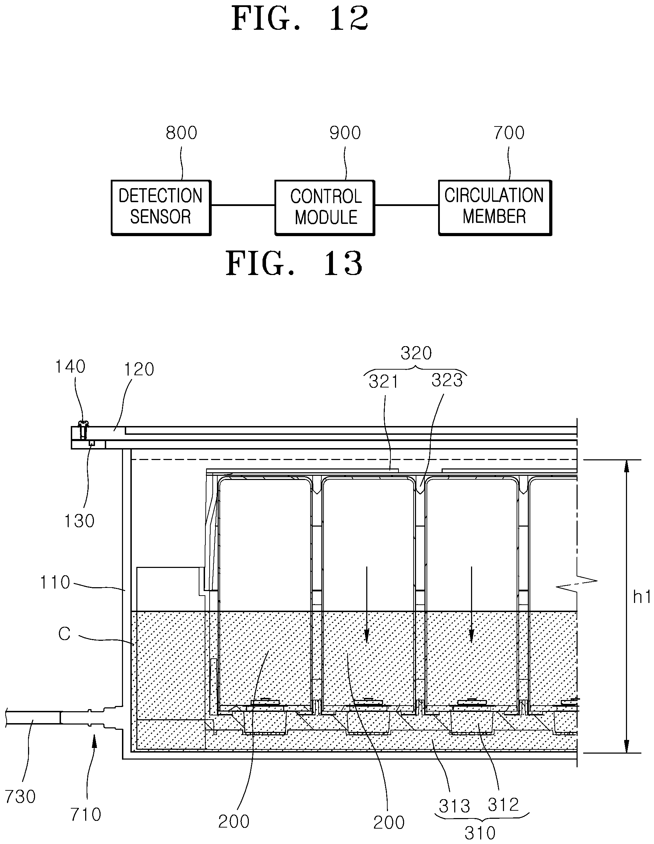

FIG. 12 is a block diagram schematically illustrating a configuration of a detection sensor and a control module.

Referring to FIG. 12, the energy storage system according to the present embodiment may further include a detection sensor 800 and a control module 900.

The detection sensor 800 may detect a level of the cooling fluid C accommodated inside the case 100. The detection sensor 800 may include at least one of a contact-type level sensor that is installed inside the case body 110 to directly detect the level of the cooling fluid C, a non-contact type level sensor, or a flow rate sensor that can indirectly detect the level of the cooling fluid C by measuring a flow rate of the cooling fluid C using the first port 710 and the second port 720.

The control module 900 may control the operation of the circulation member 700 on the basis of data detected by the detection sensor 800. That is, the control module 900 may function as a component that actively adjusts the level of the cooling fluid C accommodated in the case 100 on the basis of the data for the level of the cooling fluid C detected by the detection sensor 800.

The control module 900 may monitor the data detected by the detection sensor 800 in real time, and may be implemented in the form of an integrated circuit (IC), a microcontroller (µC), a microprocessor, or an application specific integrated circuit (ASIC), capable of actively controlling the operation of the first port 710, the second port 720, and the drive pump 740 on the basis of the monitored data. Further, the control module 900 may include a communication device capable of establishing a communication connection with the circulation member 700 and the detection sensor 800 and transmitting or receiving data through the established communication connection. The communication device may be implemented as a device that performs a wireless communication connection through any one of a Bluetooth communication method, a Wi-Fi communication method, a Zigbee communication method, and an NFC communication method, or as a device that performs wired communication through a cable or the like.

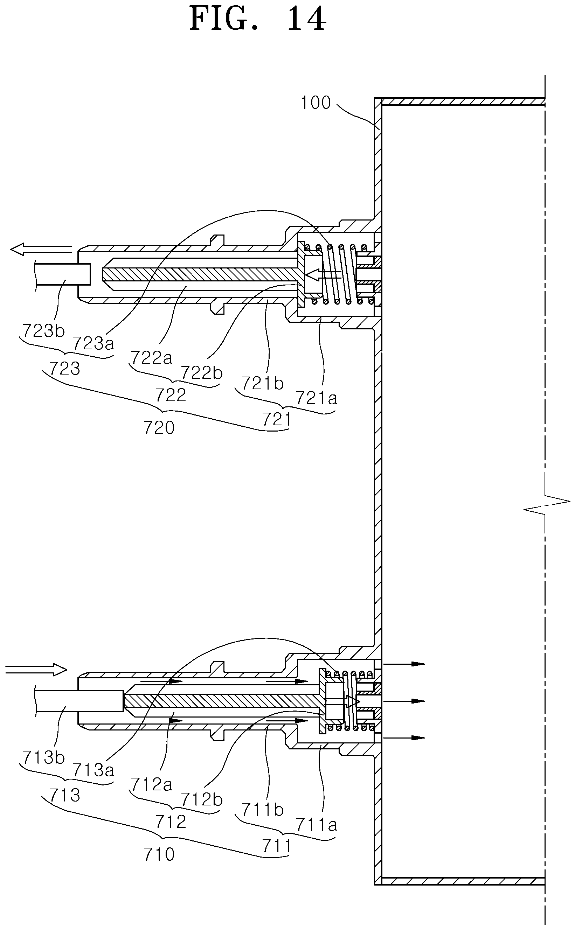

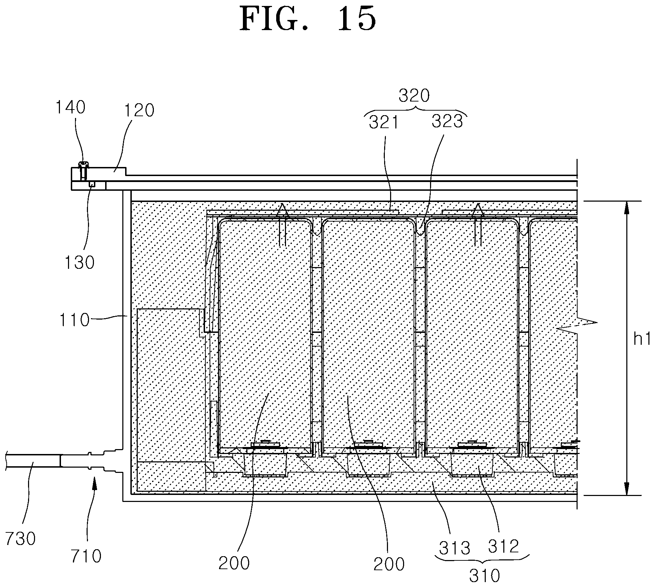

FIGS. 13 to 16 are views schematically illustrating a process of adjusting a level of a cooling fluid.

Referring to FIGS. 13 to 15, when the level of the cooling fluid C inside the case body 110 is reduced to a set height h1 or less, the control module 900 may operate the second pressing member 723b so that the second pressing member 723b is moved in a direction of being separated from the second moving rod 722a.

Here, the design of the set height h1 may be variously suitably changed within a range greater than the height of the battery cell 200.

When the second pressing member 723b is separated from the second moving rod 722a, the second plug 722b may be moved in a direction of coming into contact with the inner surface of the second large-diameter portion 721a connected to the second small-diameter portion 721b due to the pressure of the cooling fluid C inside the case body 110 and the elastic force of the second elastic member 723a, and may close the second port housing 721.

Also, the control module 900 may operate the first pressing member 713b so that the first pressing member 713b is moved in a direction of coming into contact with the first moving rod 712a.

When the first pressing member 713b comes into contact with the first moving rod 712a, the first plug 712b is moved in a direction of being separated from the inner surface of the first large-diameter portion 711a connected to the first small-diameter portion 711b due to the pressing force applied from the first pressing member 713b and the pressure of the cooling fluid C introduced into the first small-diameter portion 711b, and may open the first port housing 711.

Accordingly, a flow rate of the cooling fluid C discharged from the inside of the case body 110 is reduced compared to a flow rate of the cooling fluid C supplied to the inside of the case body 110, and the level of the cooling fluid C inside the case body 110 is increased.

Thereafter, when the level of the cooling fluid C inside the case body 110 exceeds the set height h1, the control module 900 may operate the second pressing member 723b so that the second pressing member 723b is moved in a direction of coming into contact with the second moving rod 722a.

When the second pressing member 723b comes into contact with the second moving rod 722a, the second plug 722b may be moved in a direction of being separated from the inner surface of the second large-diameter portion 721a connected to the second small-diameter portion 721b, and may open the second port housing 721.

At the same time, the control module 900 may operate the first pressing member 713b so that the first pressing member 713b is moved in a direction of being separated from the first moving rod 712a.

When the first pressing member 713b is separated from the first moving rod 712a, the first plug 712b may be moved in a direction of coming into contact with the inner surface of the first large-diameter portion 711a connected to the first small-diameter portion 711b due to the pressure of the cooling fluid C inside the case body 110 and the elastic force of the first elastic member 713a, and may close the first port housing 711.

Accordingly, the flow rate of the cooling fluid C discharged from the inside of the case body 110 is increased compared to the flow rate of the cooling fluid C supplied to the inside of the case body 110, and the level of the cooling fluid C inside the case body 110 is reduced.

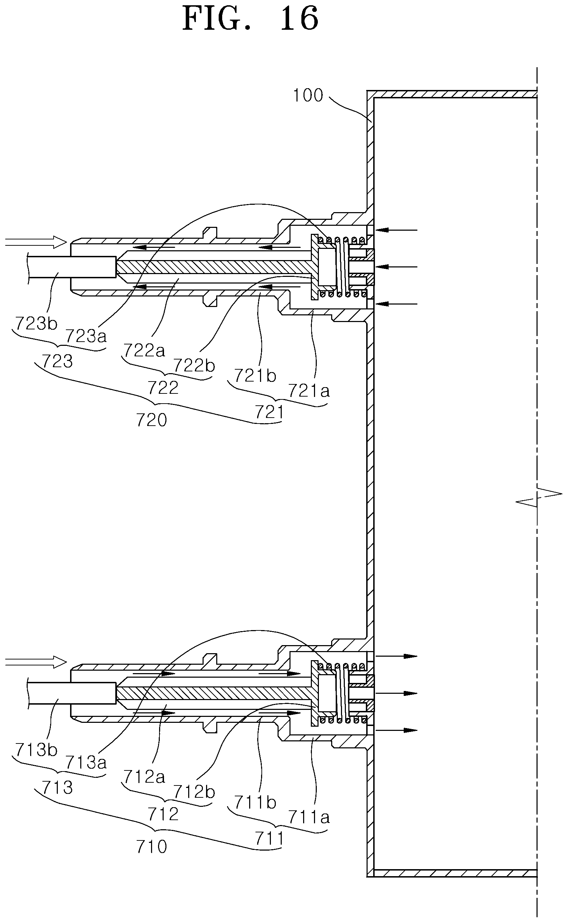

Referring to FIG. 16, when the cooling fluid C inside the case body 110 is positioned at the set height h1, the control module 900 may operate the first pressing member 713b and the second pressing member 723b so that both of the first port housing 711 and the second port housing 721 are opened, and the cooling fluid C may be moved in circulation through the second port 720, the circulation line 730, and the first port 710 sequentially by the operation of the drive pump 740.

The energy storage system according to the present embodiment may further include a relief member 500 and a blocking member 600. The relief member 500 and the blocking member 600 according to the present embodiment may be configured in substantially the same way as the relief member 500 and the blocking member 600 according to an embodiment of the present disclosure described with reference to FIGS. 1 to 8.

Hereinafter, an energy storage system according to still another embodiment of the present disclosure will be described.

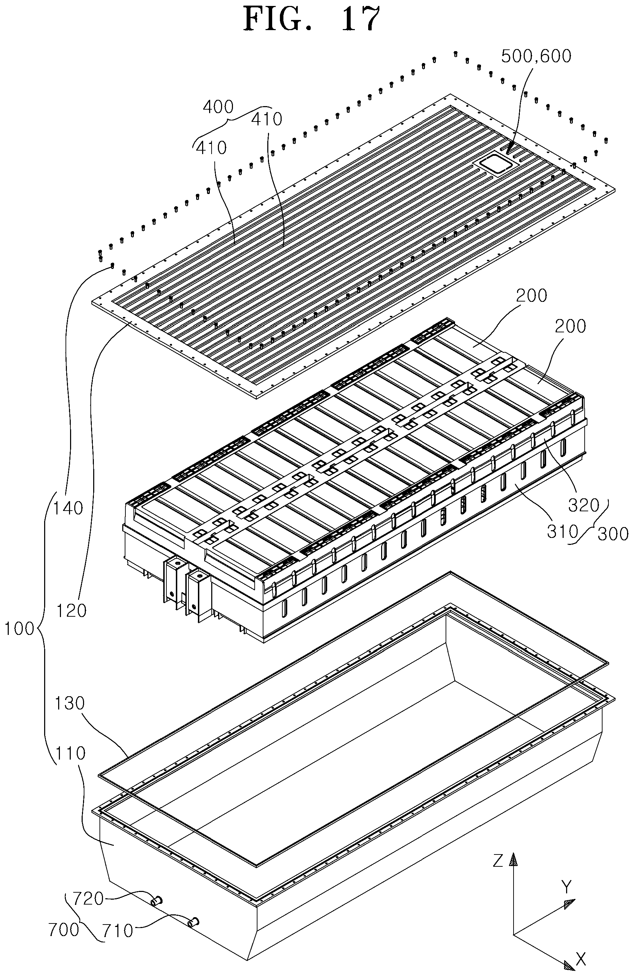

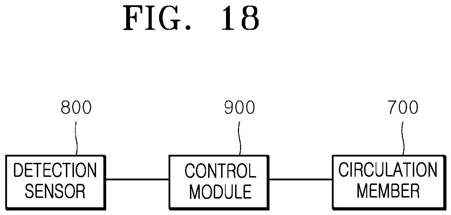

FIG. 17 is an exploded perspective view schematically illustrating a configuration of an energy storage system according to an embodiment of the present disclosure, and FIG. 18 is a block diagram schematically illustrating the configuration of the energy storage system according to an embodiment of the present disclosure.

Referring to FIGS. 17 and 18, the energy storage system according to the present embodiment may include a case 100, a battery cell 200, a support member 300, a heat dissipation member 400, and a circulation member 700.

The description of the case 100, the battery cell 200, the support member 300, and the heat dissipation member 400 according to an embodiment of the present disclosure described with reference to FIGS. 1 to 8 may be directly applied to the case 100, the battery cell 200, the support member 300, and the heat dissipation member 400 according to the present embodiment, and the description of the circulation member 700 according to another embodiment of the present disclosure described with reference to FIGS. 9 to 16 may be directly applied to the circulation member 700 according to the present embodiment.

The energy storage system according to the present embodiment may further include a relief member 500, a blocking member 600, a detection sensor 800, and a control module 900.

The relief member 500 and the blocking member 600 according to the present embodiment may be configured in substantially the same way as the relief member 500 and the blocking member 600 according to an embodiment of the present disclosure described with reference to FIGS. 1 to 8, and the detection sensor 800 and the control module 900 according to the present embodiment may be configured in substantially the same way as the detection sensor 800 and the control module 900 according to another embodiment of the present disclosure described with reference to FIGS. 9 to 16.

According to one or more embodiments of the present disclosure, battery cells can be directly immersed in a cooling fluid inside a case, and thus it is possible to further improve the cooling effect of the battery cells.

According to one or more embodiments of the present disclosure, it is possible to prevent or reduce the temperature of the cooling fluid from continuously rising during a process of cooling the battery cells, using a heat dissipation member.

According to one or more embodiments of the present disclosure, a vent of the battery cell is disposed to face a bottom surface of the case, and thus it is possible to rapidly and stably extinguish a fire when the battery cell ignites.

According to one or more embodiments of the present disclosure, by preventing or substantially preventing an internal pressure of the case from excessively increasing using a relief member, it is possible to prevent or reduce safety accidents such as explosions or the like.

According to one or more embodiments of the present disclosure, by blocking a flame from being discharged to the outside of the case using a blocking member, it is possible to prevent or substantially prevent the flame from spreading to adjacent facilities.

According to one or more embodiments of the present disclosure, it is possible to allow the temperature of the cooling fluid accommodated inside the case to be maintained constant using a circulation member, and prevent or reduce a decrease in cooling efficiency due to stagnation of the cooling fluid.

According to one or more embodiments of the present disclosure, by actively controlling the level of the cooling fluid accommodated inside the case using a detection sensor and a control module, it is possible to flexibly change the cooling efficiency of the battery cell.

According to one or more embodiments of the present disclosure, the control module and the cooling module are spaced apart from each other with a battery module interposed therebetween, and thus it is possible to prevent or reduce damage to the control module by coolant leaking from the cooling module.

According to one or more embodiments of the present disclosure, a volume of an accommodation portion is greater than a volume of coolant circulating through a plurality of battery modules, and thus it is possible to prevent or substantially prevent the coolant from leaking to the outside of a container even when the coolant circulating through the plurality of battery modules all leaks.

According to one or more embodiments of the present disclosure, it is possible to prevent or substantially prevent the level of the coolant accommodated in the accommodation portion from rising excessively using a drain hole and an opening/closing member.

However, the effects obtainable through the present disclosure are not limited to the above effects, and other technical effects that are not mentioned will be clearly understood by those skilled in the art from the description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. An energy storage system comprising:
a case having an internal space and a bottom surface;
a cooling fluid accommodated inside the case;
a battery cell inside the case and immersed in the cooling fluid;
a support member inside the case and configured to support the battery cell; and
a heat dissipation member connected to the case and configured to dissipate heat generated from inside of the case.

2. The energy storage system as claimed in claim 1, wherein the battery cell comprises:
a cell case having an internal space;
an electrode assembly accommodated inside the cell case; and
a vent facing the bottom surface of the case, the vent being configured to be opened when an internal pressure of the cell case increases.

3. The energy storage system as claimed in claim 2, wherein the support member comprises:
a first support member to support a lower side of the battery cell; and
a second support member facing the first support member and to support an upper side of the battery cell.

4. The energy storage system as claimed in claim 3, wherein the first support member comprises:
a first support body that surrounds the lower side of the battery cell;
a discharge portion that is formed to pass through the first support body and arranged to face the vent; and
a seating portion that extends from the first support body and is in contact with the bottom surface of the case.

5. The energy storage system as claimed in claim 4, wherein the discharge portion is spaced apart from the bottom surface of the case.

6. The energy storage system as claimed in any preceding claim, wherein the heat dissipation member comprises a plurality of heat dissipation fins protruding from the case.

7. The energy storage system as claimed in any preceding claim, wherein the case comprises:
a case body;
a cover facing the case body; and
a gasket between the case body and the cover.

8. The energy storage system as claimed in claim 7, wherein the gasket is inserted into a gasket groove formed concavely toward inside of the case body.

9. The energy storage system as claimed in any preceding claim, further comprising a relief member that is installed in the case and configured to rupture when an internal pressure of the case increases to a set pressure or higher, and optionally
further comprising a blocking member that is arranged to face the relief member and configured to block a flame generated inside the case from being discharged to outside of the case.

10. An energy storage system comprising:
a case having an internal space and a bottom surface;
a cooling fluid accommodated inside the case;
a battery cell inside the case and immersed in the cooling fluid;
a support member inside the case and configured to support the battery cell; and
a circulation member connected to the case and configured to circulate the cooling fluid.

11. The energy storage system as claimed in claim 10, wherein the battery cell comprises:
a cell case having an internal space;
an electrode assembly accommodated inside the cell case; and
a vent facing the bottom surface of the case, the vent being configured to be opened when an internal pressure of the cell case increases.

12. The energy storage system as claimed in claim 10 or 11, wherein the circulation member comprises:
a first port connected to the case and configured to supply the cooling fluid into the case;
a second port spaced apart from the first port and configured to discharge the cooling fluid from inside of the case;
a circulation line connected to the first port and the second port;
a drive pump that is installed in the circulation line and configured to transmit the cooling fluid discharged from the second port to the first port; and
a chiller that is installed in the circulation line and configured to cool the cooling fluid moving along the circulation line.

13. The energy storage system as claimed in claim 12, wherein the first port comprises:
a first port housing fixed to the case and connected to the internal space of the case;
a first plug member that is movably installed in the first port housing and configured to open or close the first port housing according to a moving direction thereof; and
a first adjustment member that is connected to the first plug member and configured to adjust the moving direction of the first plug member, and
the second port comprises:
a second port housing fixed to the case and connected to the internal space of the case;
a second plug member that is movably installed in the second port housing and configured to open or close the second port housing according to a moving direction thereof; and
a second adjustment member that is connected to the second plug member and configured to adjust the moving direction of the second plug member.

14. The energy storage system as claimed in claim 13, wherein the first adjustment member comprises:
a first elastic member that is arranged on one side of the first plug member and configured to press the first plug member in a direction in which the first port housing is closed; and
a first pressing member that is arranged on another side of the first plug member and configured to selectively press the first plug member in a direction in which the first port housing is opened.

15. The energy storage system as claimed in any one of claims 10 to 14, further comprising:
a detection sensor configured to detect a level of the cooling fluid inside the case; and
a control module configured to control an operation of the circulation member according to data detected from the detection sensor.
